(19) Europäisches Patentamt

European Patent Office

Office européen des brevets

(11) Veröffentlichungsnummer: **0 290 737 B1**

# (12) EUROPÄISCHE PATENTSCHRIFT

(45) Veröffentlichungstag der Patentschrift: **06.05.92**

(51) Int. Cl.⁵: **B60J 7/185**

(21) Anmeldenummer: **88103568.7**

(22) Anmeldetag: **08.03.88**

(54) **Verriegelungsvorrichtung für ein Verdeck am Windschutzscheibenrahmen eines Kraftfahrzeuges.**

(30) Priorität: **12.05.87 DE 3715764**

(43) Veröffentlichungstag der Anmeldung:
**17.11.88 Patentblatt 88/46**

(45) Bekanntmachung des Hinweises auf die
Patenterteilung:
**06.05.92 Patentblatt 92/19**

(84) Benannte Vertragsstaaten:
**DE ES FR GB IT**

(56) Entgegenhaltungen:
**GB-A- 2 007 602**
**GB-A- 2 157 360**

(73) Patentinhaber: **Dr.Ing.h.c. F. Porsche Aktiengesellschaft**
**Porschestrasse 42**
**W-7000 Stuttgart 40(DE)**

(72) Erfinder: **Schlachter, Reimund**
**Engelbergstrasse 16/1**
**W-7255 Rutesheim(DE)**
Erfinder: **Homann, Bodo**
**Schlehenweg 9**
**W-7258 Heimsheim(DE)**

## Beschreibung

Die Erfindung bezieht sich auf eine Verriegelungsvorrichtung für ein Verdeck am Windschutzscheibenrahmen eines Kraftfahrzeuges, insbesondere für ein Klappverdeck, die ein an einem vorderen Rahmenteil des Verdecks angeordnetes Verriegelungsorgan und eine am Windschutzscheibenrahmen vorgesehene Aufnahme umfaßt, wobei ein um eine etwa horizontal ausgerichtete Drehachse bewegbarer Schwenkarm des Verriegelungsorgans eine Rolle aufweist, die beim Schließvorgang des Verdecks mit einer Führungsbahn der Aufnahme zusammenwirkt.

Aus der DE-C 34 13 379 ist eine, eine gute Funktion aufweisende Verriegelungsvorrichtung für ein Verdeck bekannt, wobei sowohl eine manuelle als auch eine elektromotorische Betätigung des Schwenkarmes vorgesehen ist. Dieser Anordnung haftet der Nachteil an, daß für beide Versionen unterschiedliche Kulissenführungen erforderlich sind, wodurch die Herstellungskosten erhöht werden. Ferner lassen sich bei der manuellen Version aufgrund des Schwenkwinkels und der Ausgestaltung der Führungskulisse nur geringe senkrechte Hubbewegungen realisieren, d. h., das Klappverdeck muß mit erheblichem Kraftaufwand von Hand relativ weit nach unten gezogen werden.

Aufgabe der Erfindung ist es, eine Verriegelungsvorrichtung nach dem Oberbegriff zwischen einem Windschutzscheibenrahmen und einem vorderen Rahmenteil des Verdecks zu schaffen, die bei einfachem Aufbau eine gute Funktion aufweist und mit der auch bei manuell betätigtem Verriegelungsorgan große Hubbewegungen in senkrechter Richtung erzielbar sind. Ferner sollen die Bedienungskräfte der Betätigungseinrichtung reduziert werden.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die Anordnung von zwei Rollen am Schwenkarm auch bei der manuellen Version ein großer Hub in senkrechter Richtung und andererseits geringe Bedienungskräfte während des Schließvorganges erzielt werden. Die den wesentlichsten Teil der Hubbewegung durchführende erste Rolle weist einen größeren Hebelarm auf, während die die Verriegelung bewirkende zweite Rolle mit einem kürzeren Hebelarm versehen ist. Der Schwenkarm mit den beiden Rollen sowie die Aufnahme mit der Führungsbahn sind bei der elektromotorischen und bei der manuellen Version der Verriegelungsvorrichtung identisch ausgebildet, wodurch die Herstellungskosten beträchtlich reduziert werden können. Der Abstand zwischen den beiden Rollen ist derart ausgebildet, daß eine Art Fanghakeneffekt erzielt wird, d.h., wenn die erste Rolle den endseitigen Nocken der Führungsbahn passiert, greift die zweite Rolle bereits in die Führungsbahn ein, so daß das Klappdach nicht mehr selbsttätig nach oben bewegt werden kann. Bei geringer Bauhöhe kann mit der erfindungsgemäßen Verriegelungsvorrichtung ein relativ großer Hub in senkrechter Richtung erzielt werden.

Ein Ausführungsbeispiel der Erfindung ist in den Zeichnungen dargestellt und wird nachstehend näher erläutert.

Es zeigt

Fig. 1    eine Teilseitenansicht eines Personenwagens mit einem Klappverdeck,

Fig. 2    eine Draufsicht auf den vorderen Bereich des Klappverdecks in größerer Darstellung, wobei das Verriegelungsorgan mit einem Elektromotor gekoppelt ist,

Fig. 3    eine Ansicht in Pfeilrichtung R der Fig. 2,

Fig. 4    einen Schnitt nach der Linie IV-IV der Fig. 3,

Fig. 5    eine Vorderansicht der Aufnahme,

Fig. 6    eine Vorderansicht der Aufnahme und des Verriegelungsorganes,

Fig. 7    eine Vorderansicht des Verriegelungsorganes,

Fig. 8    einen Schnitt nach der Linie VIII-VIII der Fig. 7,

Fig. 9    eine Seitenansicht auf das elektromotorisch betätigte Verriegelungsorgan,

Fig. 10    einen Schnitt nach der Linie X-X der Fig. 5.

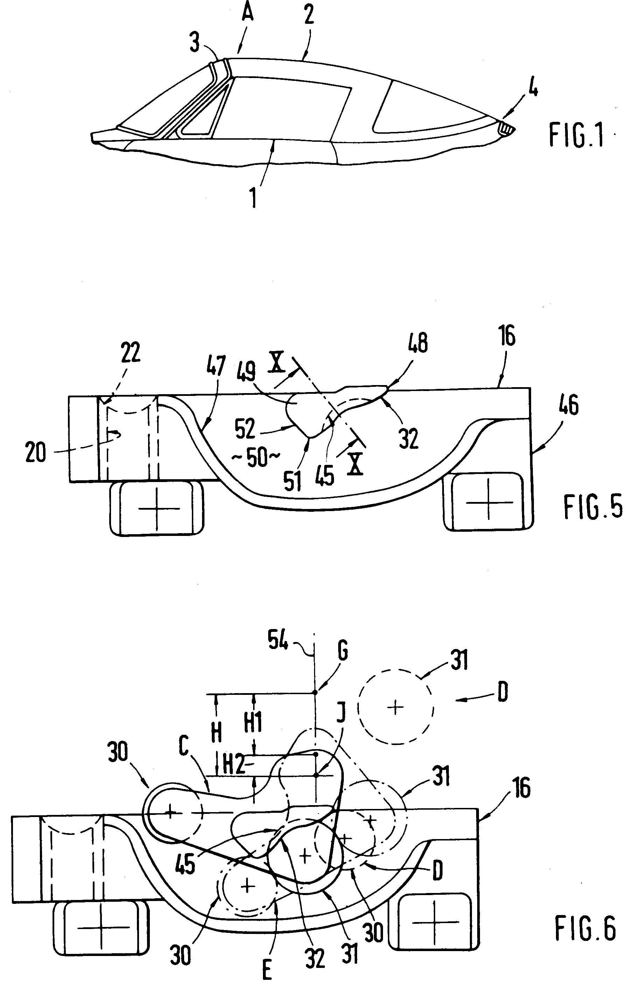

Der in Fig. 1 dargestellte Teilbereich eines Personenwagens weist oberhalb einer Gürtellinie 1 ein Klappverdeck 2 auf, das sich in seiner Schließstellung A zwischen einem Windschutzscheibenrahmen 3 und einem Heckbereich 4 erstreckt und lösbar am Windschutzscheibenrahmen 3 in Lage gehalten ist.

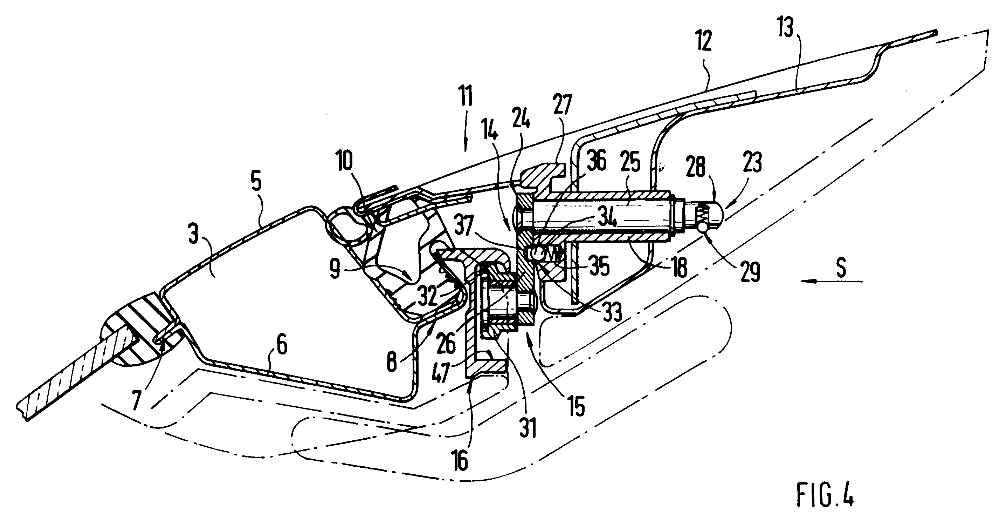

Der Windschutzscheibenrahmen 3 setzt sich aus zwei Profilteilen 5 und 6 zusammen, die an gleichgerichteten Flanschen 7 bzw. 8 durch Schweißen miteinander verbunden sind (Fig. 4). Das außenliegende Profilteil 5 weist eine U-förmige Rinne 9 auf, in die ein Dichtkörper 10 eingesetzt ist, auf dem ein Randbereich eines vorderen Rahmenteiles 11 des Klappverdecks 2 aufliegt. Das querverlaufende vordere Rahmenteil 11 setzt sich aus Blechpreßteilen 12, 13 zusammen, die durch Schweißen, Kleben oder dergleichen miteinander verbunden sind.

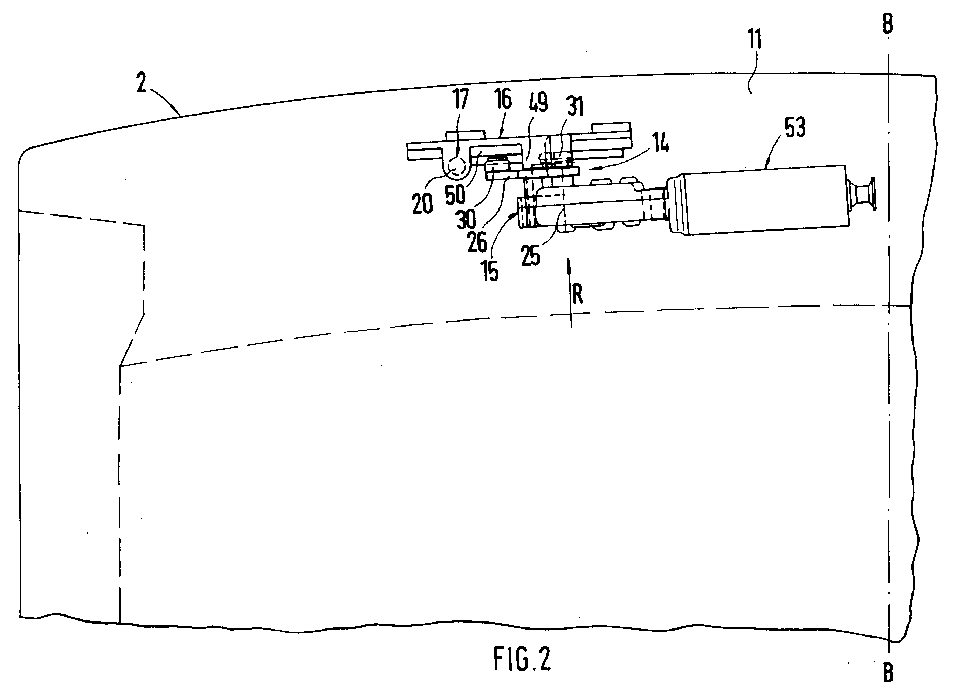

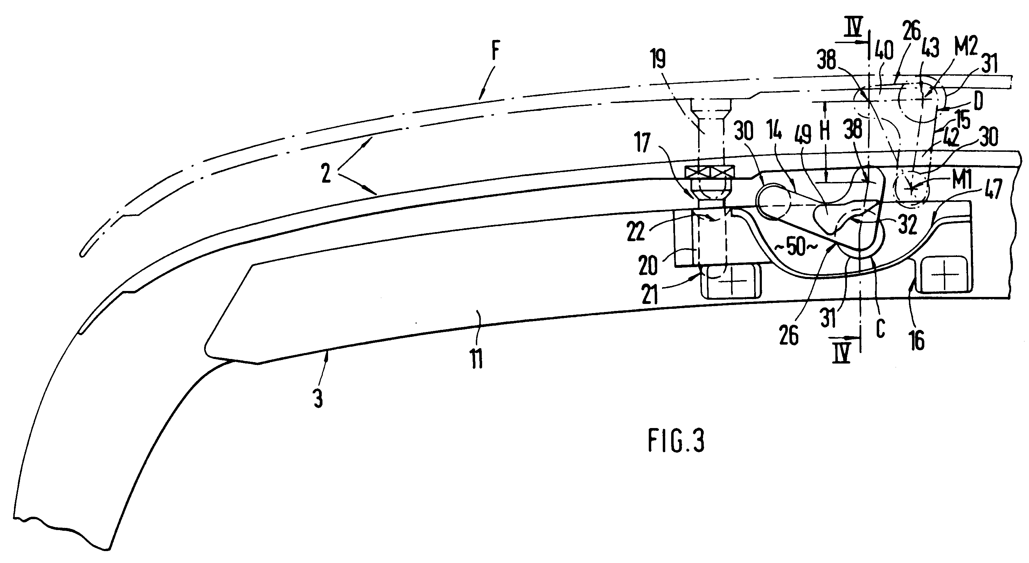

Zur Fixierung des Klappverdecks 2 am Windschutzscheibenrahmen 3 ist beiderseits einer Mittellängsebene B-B jeweils eine Verriegelungsvorrichtung 14 vorgesehen. In den Fig. 2 bis 8 ist jeweils die in Fahrtrichtung gesehen linke Seite der Verriegelungsvorrichtung 14 dargestellt. Jede Verriegelungsvorrichtung 14 umfaßt ein am vorderen Rahmenteil 11 des Klappverdecks 2 angeordnetes Verriegelungsorgan 15, eine am Windschutzscheibenrahmen 3 vorgesehene Aufnahme 16 und eine zwischen Klappverdeck 2 und Windschutzscheibenrahmen 3 wirkende Zentriereinrichtung 17 (Fig. 3).

Die jeweils benachbart den Verriegelungsvorrichtungen 14 angeordneten Zentriereinrichtungen 17 sind in den Fig. 2 und 3 dargestellt und umfassen je einen am vorderen Rahmenteil 11 angebrachten, vertikal verlaufenden Bolzen 19, der mit einer an der Aufnahme 16 vorgesehenen Hülse 20 formschlüssig zusammenwirkt. Die Hülse 20 ist in einem seitlich außenliegenden Endbereich der Aufnahme 16 angeordnet und einstückig mit dieser hergestellt. Der aus metallischem Werkstoff gefertigte Bolzen 19 ist an seinem freien Ende 21 kalottenförmig ausgebildet. Die Hülse 20 weist im oberen Bereich eine kalottenförmige Erweiterung 22 auf. Mittels der Zentriereinrichtung 17 wird das Klappverdeck 2 in Fahrzeuglängs- und Fahrzeugquerrichtung in seiner Lage fixiert, bevor das Verriegelungsorgan 15 in die Aufnahme 16 eingreift.

Gemäß den Fig. 3, 4 und 8 weist das Verriegelungsorgan 15 eine mit einer Betätigungseinrichtung 23 verbundene Kurbel 24 auf, wobei sich die Kurbel 24 aus einer Drehachse 25 und einem Schwenkarm 26 zusammensetzt. Der Schwenkarm 26 verläuft rechtwinkelig zur Drehachse 25. Die Drehachse 25 der Kurbel 24 ist etwa horizontal ausgerichtet und erstreckt sich parallel zu einer Mittellängsebene B-B. Entsprechend Fig. 8 ist die Drehachse 25 in einem zylindrischen Abschnitt 18 einer Grundplatte 27 aufgenommen, die mittels nicht näher dargestellter Befestigungsschrauben am vorderen Rahmenteil 11 des Klappverdecks 2 befestigt ist.

Die Betätigungseinrichtung 23 für das manuell betätigbare Verriegelungsorgan 15 wird durch einen nicht gezeigten Handgriff gebildet, der lösbar auf einen endseitig angeordneten Vierkant 28 der Drehachse 25 aufsteckbar ist. Der Handgriff wird durch eine lösbare Arretiereinrichtung 29 in seiner aufgesteckten Lage fixiert.

An dem in Fahrtrichtung gesehen vor der Grundplatte 27 angeordneten Schwenkarm 26 sind zwei mit Abstand zueinander angeordnete, drehbar gelagerte Rollen 30, 31 angeordnet, die beim Betätigen des Schwenkarmes 26 nacheinander mit einer Führungsbahn 32 der Aufnahme 16 zusammenwirken, dergestalt, daß bei einer Drehbewegung des Schwenkarmes 26 eine senkrechte Hubbewegung H des Rahmenteiles 11 des Klappverdecks 2 sowie eine Verriegelung des Klappverdecks 2 bewirkt wird.

Die beiden Rollen 30, 31 sind so am Schwenkarm 26 angeordnet, daß die erste Rolle 30 erst dann außer Eingriff mit der Führungsbahn 32 gelangt, nachdem die zweite Rolle 31 bereits mit der Führungsbahn 32 zusammenwirkt.

In der Verriegelungsstellung C und in der entriegelten Endstellung D der Verriegelungsvorrichtung 14 ist zwischen dem Schwenkarm 26 und der angrenzenden Grundplatte 27 eine Arretiereinrichtung 33 vorgesehen. Sowohl die Arretiereinrichtung 33 für den Schwenkarm 26 als auch die Arretiereinrichtung 29 für den Handgriff werden durch je eine federbelastete Kugel 34 gebildet, die in eine Ausnehmung 35 eingesetzt ist, wobei ein hervorstehender Kalottenabschnitt 36 in eine Aussparung 37 des Schwenkarmes 26 bzw. des Handgriffes eingreift.

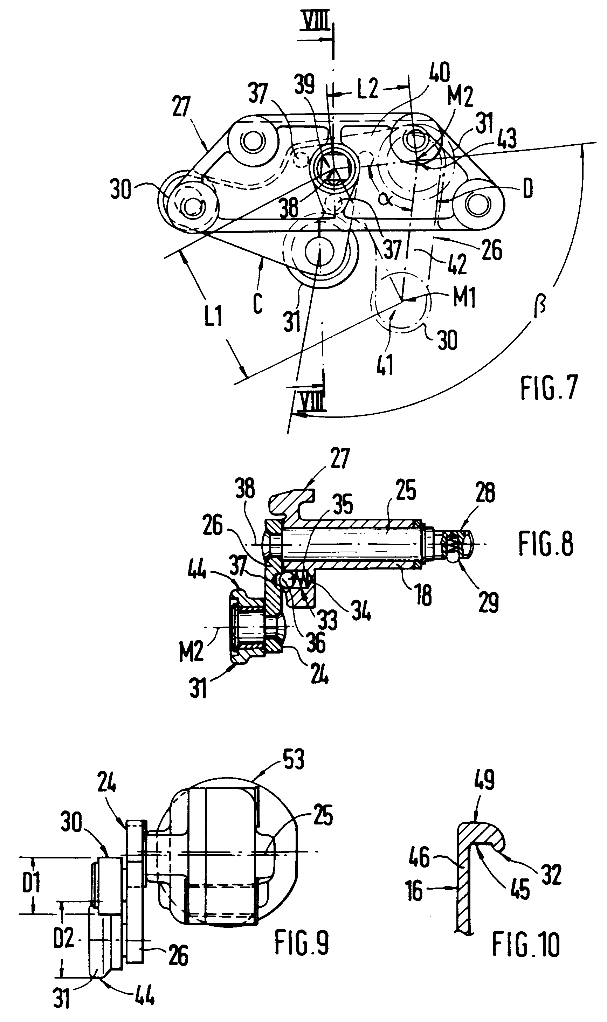

Die beiden Rollen 30, 31 weisen ferner unterschiedliche Abstände $L_1$, $L_2$ zum Drehpunkt 38 des Schwenkarmes 26 auf. Der Schwenkarm 26 ist etwa L-förmig ausgebildet, wobei die Drehachse 25 der Kurbel 24 mit dem freien Ende 39 des kürzeren Schenkels 40 fest verbunden ist. Die Mittelpunkte $M_1$, $M_2$ der beiden Rollen 30, 31 sind am freien Ende 41 des längeren Schenkels 42 und im Schnittpunkt 43 der beiden Schenkel 40, 42 angeordnet, dergestalt, daß der Drehpunkt 38 des Schwenkarmes 26 und die beiden Mittelpunkte $M_1$, $M_2$ der beiden Rollen 30, 31 ein Dreieck bilden. Gemäß Fig. 7 beträgt der Winkel $\alpha$ des Dreiecks etwa 80°.

Die erste, am freien Ende 41 des längeren Schenkels 40 des Schwenkarmes 26 angeordnete Rolle 30 weist dabei einen größeren Abstand $L_1$ zum Drehpunkt 38 des Schwenkarmes 26 auf als die zweite Rolle 31. Durch diese Anordnung wird erreicht, daß mit der ersten Rolle 30 eine relativ große Hubbewegung $H_1$ in senkrechter Richtung erfolgt, während mit der zweiten Rolle 31 nur eine relativ geringe Hubbewegung $H_2$ und die Verriegelung des Klappverdecks 2 erzielt wird (Fig. 6). Der Hub $H_1$ ist dabei drei- bis fünfmal so groß wie der Hub $H_2$. Außerdem wird durch die unterschiedlichen Abstände $L_1$, $L_2$ der beiden Rollen 30, 31 bewirkt, daß während des gesamten Schließvorganges des Klappverdecks 12 stets nur eine geringe Bedienungskraft erforderlich ist.

Die erste Rolle 30 weist in Fahrzeuglängsrichtung gesehen, einen gleichbleibenden Außendurchmesser $D_1$ auf, d. h., mit dieser Rolle erfolgt keine Fixierung des Klappverdecks 2 in Fahrzeuglängsrichtung. Die zweite Rolle 31 weist auf der der Aufnahme 16 zugekehrten Seite einen Kragen 44 auf, der einen größeren Außendurchmesser $D_2$ besitzt als der daran anschließende Bereich. Bei verriegeltem Klappverdeck 2 hintergreift die zweite Rolle 31 mit dem Kragen 44 eine an der Aufnahme 16 ausgebildete, kreisbogenförmige Raste 45. Die Raste 45 ist in Querrichtung gesehen, versetzt zum Drehpunkt 38 des Schwenkarmes 26 angeordnet, dergestalt, daß die zweite Rolle 31 bei verriegeltem Klappverdeck C eine Übertotpunktlage einnimmt und somit selbsttätig in Lage gehalten wird. Die am Windschutzscheibenrahmen 3 befestigte Aufnahme 16 umfaßt einen plattenförmigen Grundkörper 46, an dem die Führungsbahn 32 und ein Führungsabschnitt 47 vorgesehen sind. Die sich in Fahrzeugquerrichtung erstreckende Führungsbahn 32 weist eine relativ geringe Längserstreckung in Querrichtung auf und ist an einem oberen Randbereich 48 des Grundkörpers 46 angeordnet. Die Führungsbahn 32 ist einem etwa dreieckförmigen Element 49 zugeordnet, das den darunterliegenden, kanalförmigen Bereich 50 in Längsrichtung (nach hinten hin) überragt. Die zur Fahrzeugaußenseite schräg nach unten hin abfallende, kurvenförmig ausgebildete Führungsbahn 32 weist an ihrem untenliegenden Ende einen Nocken 51 auf, an den sich ein schräg nach oben und außen verlaufender Abschnitt 52 anschließt. Die Führungsbahn 32 sitzt sich aus einem ersten konvexen Abschnitt, einem nachfolgenden konkaven Abschnitt und einem weiteren konvexen Abschnitt zusammen, wobei letzterer an den Nocken 51 anschließt.

Der Abschnitt 52 und die Führungsbahn 32 sind etwa rechtwinkelig zueinander angeordnet. Der Führungsabschnitt 47 ist unterhalb des kanalförmigen Bereiches 50 angeordnet und bogenförmig ausgebildet. Beim Absenken des Klappverdecks 2 mittels des Handgriffes trifft die erste Rolle 30 am Führungsabschnitt 47 auf und wird durch diesen selbsttätig in Richtung Führungsbahn 32 umgelenkt. Falls das Klappverdeck 2 schnell nach unten gezogen wird, kann es vorkommen, daß auch die zweite Rolle 31 durch den Führungsabschnitt 47 umgelenkt wird.

Anstelle der manuellen Betätigung des Verriegelungsorgans 15 ist auch eine motorische Betätigung denkbar. Gemäß Fig. 2 ist an die Drehachse 25 der Kurbel 24 ein Elektromotor 53 mit einem Getriebe angeschlossen, wobei sich die aus Elektromotor 53 und Getriebe bestehende Baueinheit in Fahrzeugquerrichtung erstreckt. Die am Windschutzscheibenrahmen 3 angeordnete Aufnahme 16 und der Schwenkarm 26 mit dem beiden Rollen 30, 31 sind für beide Versionen (manuell - motorisch) identisch ausgebildet, so daß lediglich die Grundplatte 27 für die manuelle Version bzw. das Gehäuse für die elektromotorische Version unterschiedliche Bauteile für die Verriegelungsvorrichtung darstellen.

Bei beiden Betätigungen (manuell - elektromotorisch) des Verriegelungsorgans 15 übt der Schwenkarm 26 eine Drehbewegung um einen Winkel $\beta$ von etwa 105° aus.

Die Verriegelungsvorrichtung 14 arbeitet wie folgt: Das geöffnete Klappverdeck 2 wird soweit nach vorne geschwenkt, bis die Bolzen 19 teilweise in die Hülsen 20 eingreifen. In dieser Stellung F befindet sich das Klappverdeck 2 noch etwa 30 mm oberhalb des Windschutzscheibenrahmens 3. In der entriegelten Endstellung D des Verriegelungsorganes 15 ist der Schwenkarm 26 derart ausgerichtet, daß sich der kürzere Schenkel 40 etwa in horizontaler Richtung erstreckt, während der längere Schenkel 42 etwa vertikal nach unten ragt. Die am freien Ende 41 des längere Schenkels 42 angeordnete erste Rolle 30 wirkt bereits dann mit der Führungsbahn 32 zusammen, wenn sich das Klappverdeck 2 noch etwa 25 mm oberhalb des Windschutzscheibenrahmens 3 befindet. Durch Drehen der Betätigungseinrichtung 23 im Uhrzeigersinn wirkt die erste Rolle 30 dergestalt mit der Führungsbahn 32 zusammen, daß das Klappverdeck 2 selbsttätig um einen Betrag H 1 nach unten in Richtung Windschutzscheibenrahmen 3 gezogen wird. Die erste Rolle 30 gleitet dabei entlang der Führungsbahn 32 bis zum Nocken 51. Sobald die erste Rolle 30 am Nocken 51 anliegt (Zwischenstellung E), gelangt die zweite Rolle 31 in Kontakt mit der Führungsbahn (siehe Fig. 6). Durch eine weitere Drehbewegung des Schwenkarmes 26 gelangt die erste Rolle 30 außer Eingriff mit der Führungsbahn 32 und verschwenkt entlang des kanalförmigen Bereichs 50 ins Freie (sie übt dann keine Funktion mehr aus).

In der Verriegelungsstellung C untergreift die zweite Rolle 31 mit dem Kragen 44 die im mittleren Bereich der Führungsbahn 32 angeordnete Raste 45.

Mit der erfindungsgemäßen Verriegelungsvorrichtung läßt sich sowohl bei der manuellen als auch bei der elektromotorischen Betätigung eine senkrechte Hubbewegung H von etwa 25 mm bei einer Schwenkbewegung der Betätigungseinrichtung 23 um einen Winkel $\beta$ von lediglich 105° durchführen.

Der Drehpunkt 38 des Schwenkarmes 26 befindet sich sowohl bei entriegeltem als auch bei verriegeltem Klappverdeck 2 oberhalb der Aufnahme 16. Beim Verschwenken der Betätigungseinrichtung 23 wandert der Drehpunkt 38 des Schwenkarmes 26 auf einer vertikalen Geraden 54 von einem Punkt F zu einem darunterliegenden Punkt J.

**Patentansprüche**

1. Verriegelungsvorrichtung (14) für ein Verdeck (2) am Windschutzscheibenrahmen (3) eines Kraftfahrzeuges, insbesondere für ein Klappverdeck (2), die ein an einem vorderen Rahmenteil (11) des Verdecks angeordnetes Verriegelungsorgan (14) und eine am Windschutzscheibenrahmen (3) vorgesehene Aufnahme (16) umfaßt, wobei ein um eine etwa horizontal ausgerichtete Drehachse (25) bewegbarer Schwenkarm (26) des Verriegelungsorganes eine drehbare Rolle (30) aufweist, die beim Schließvorgang des Verdecks (2) mit einer Führungsbahn (32) der Aufnahme (16) zusammenwirkt, dadurch gekennzeichnet, daß am Schwenkarm (26) zwei mit Abstand zueinander angeordnete Rollen (30, 31) angebracht sind, die beim Betätigen des Schwenkarmes (26) nacheinander mit der feststehenden Führungsbahn (32) zusammenwirken.

2. Verriegelungsvorrichtung nach Anspruch 1, dadurch gekennzeichnet, daß die beiden Rollen (30, 31) unterschiedliche Abstände (L1, L2) zum Drehpunkt (38) des Schwenkarmes (26) aufweisen.

3. Verriegelungsvorrichtung nach Anspruch 1, dadurch gekennzeichnet, daß der Schwenkarm (26) etwa L-förmig ausgebildet ist, wobei der Drehpunkt (38) des Schwenkarmes (26) an einem freien Ende (39) seines kürzeren Schenkels (40) angeordnet ist, während die Mittelpunkte (M1, M2) der beiden Rollen (30, 31) einerseits im Schnittpunkt (43) der beiden Schenkel (40, 42) und andererseits am freien Ende (41) des anderen Schenkels (42) vorgesehen sind.

4. Verriegelungsvorrichtung nach Anspruch 3, dadurch gekennzeichnet, daß der Drehpunkt (38) des Schwenkarmes (26) und die Mittelpunkte (M1, M2) der beiden Rollen (30, 31) dreieckförmig zueinander angeordnet sind.

5. Verriegelungsvorrichtung nach den Ansprüchen 1 und 2, dadurch gekennzeichnet, daß beim Zusammenwirken der ersten, einen größeren Abstand (L1) zum Drehpunkt (38) aufweisenden Rolle (30) mit der Führungsbahn (32) das Verdeck (2) eine senkrechte Hubbewegung um einen Betrag (H1) durchführt, wogegen beim nachfolgenden Zusammenwirken der zweiten Rolle (31) mit der Führungsbahn (32) das Verdeck (2) eine senkrechte Hubbewegung um einen Betrag (H2) ausübt und ferner eine Verriegelung des Verdecks (2) stattfindet.

6. Verriegelungsvorrichtung nach Anspruch 1, dadurch gekennzeichnet, daß die erste Rolle (30) außer Eingriff mit der Führungsbahn (32) gelangt, nachdem die zweite Rolle (31) Kontakt mit der Führungsbahn (32) hat.

7. Verriegelungsvorrichtung nach Anspruch 1, dadurch gekennzeichnet, daß die beiden Rollen (30, 31) unterschiedliche Außendurchmesser aufweisen.

8. Verriegelungsvorrichtung nach Anspruch 1, dadurch gekennzeichnet, daß die an der Aufnahme (16) vorgesehene kurvenförmige Führungsbahn (32) in Richtung Fahrzeugaußenseite hin schräg nach unten geneigt ist und in einem mittleren Bereich eine kreisbogenförmige Raste (45) aufweist, die die Verriegelungsstellung (C) des Verdecks (2) definiert.

9. Verriegelungsvorrichtung nach Anspruch 8, dadurch gekennzeichnet, daß am unteren Ende der Führungsbahn (32) ein Nocken (51) angeordnet ist, an den sich ein etwa rechtwinkelig zur Führungsbahn (32) nach oben hin verlaufender Abschnitt (52) anschließt, der ein Freischwenken der ersten Rolle (30) nach Passieren des Nockens (51) ermöglicht.

10. Verriegelungsvorrichtung nach Anspruch 9, dadurch gekennzeichnet, daß unterhalb der Führungsbahn (32) an der Aufnahme (16) ein kanalförmiger Bereich (50) vorgesehen ist, der nach unten hin durch einen bogenförmigen Führungsabschnitt (47) begrenzt ist, wobei dieser Führungsabschnitt (47) die erste Rolle (30) und gegebenenfalls die zweite Rolle (31) in Richtung der Führungsbahn (32) umlenkt.

**Claims**

1. A locking device (14) for a roof (2) on the windscreen frame (3) of a motor vehicle, in particular for a folding roof (2), the locking device comprising a locking means (14) arranged on a front part (11) of the frame of the roof and a receiving means (16) provided on the windscreen frame (3), and a pivot arm (26) of the locking means movable about a pivot axis (25) orientated substantially horizontally having a rotatable roller (30) which cooperates with a guide path (32) of the receiving means (16) during the closing procedure of the roof (2), characterized in that two rollers (30, 31) arranged at a distance from each other are mounted on the pivot arm (26), the two rollers (30, 31) cooperating with the stationary guide path (32) in succession as the pivot arm (26) is actuated.

2. A locking device according to Claim 1, characterized in that the two rollers (30, 31) are at different distances (L1, L2) from the fulcrum (38) of the pivot arm (26).

3. A locking device according to Claim 1, characterized in that the pivot arm (26) is made substantially L-shaped, the fulcrum (38) of the pivot arm (26) being situated at a free end (39) of the shorter arm (40) thereof, while the centres (M1, M2) of the two rollers (30, 31) are provided on the one hand at the point of intersection (43) of the two arms (40, 42) and on the other hand at the free end (41) of the other arm (42).

4. A locking device according to Claim 3, characterized in that the fulcrum (38) of the pivot arm (26) and the centres (M1, M2) of the two rollers (30, 31) are arranged in a triangular manner with respect to one another.

5. A locking device according to Claims 1 and 2, characterized in that during the cooperation between the first roller (30) at a greater distance (L1) from the fulcrum (38) and the guide path (32) the roof (2) performs a vertical lifting movement by an amount (H1), whereas during the subsequent cooperation between the second roller (31) and the guide path (32) the roof (2) performs a vertical lifting movement by an amount (H2) and in addition the roof (2) is locked.

6. A locking device according to Claim 1, characterized in that the first roller (30) disengages from the guide path (32) after the second roller (31) comes into contact with the guide path (32).

7. A locking device according to Claim 1, characterized in that the two rollers (30, 31) have different external diameters.

8. A locking device according to Claim 1, characterized in that the curved guide path (32) provided on the receiving means (16) is inclined obliquely downwards in the direction towards the outside of the vehicle and is provided in a central area with an arcuate indentation (45) defining the locking position (C) of the roof (2).

9. A locking device according to Claim 8, characterized in that a cam (51) is arranged at the lower end of the guide path (32), there being attached to the cam (51) a portion (52) extending upwards substantially at right angles to the guide path (32) and allowing the first roller (30) to swing freely after passing the cam (51).

10. A locking device according to Claim 9, characterized in that a duct-shaped area (50) bounded at the bottom by an arcuate guide portion (47) is provided on the receiving means (16) below the guide path (32), the said guide portion (47) deflecting the first roller (30) and possibly the second roller (31) in the direction of the guide path (32).

**Revendications**

1. Dispositif de verrouillage (14) d'une capote (2) sur le cadre de pare-brise (3) d'un véhicule automobile, en particulier d'une capote rabattable (2), qui comporte un organe de verrouillage (14) placé sur une partie de cadre (11) avant de la capote et un logement (16) prévu sur le cadre de pare-brise (3), dans lequel un bras de pivotement (26) de l'organe de verrouillage, déplaçable autour d'un axe de rotation (25) dirigé à peu près horizontalement, présente un galet (30) tournant qui, lors de la fermeture de la capote (2), coopère avec une voie de guidage (32) du logement (16), caractérisé en ce que sur le bras de pivotement (26) sont placés deux galets (30, 31) espacés l'un de l'autre qui coopèrent l'un après l'autre avec la voie de guidage (32) fixe, pendant l'actionnement du bras de pivotement (26).

2. Dispositif de verrouillage selon la revendication 1, caractérisé en ce que les deux galets (30, 31) présentent des écartements (L1, L2) différents par rapport au point de rotation (38) du bras de pivotement (26).

3. Dispositif de verrouillage selon la revendication 1, caractérisé en ce que le bras de pivotement (26) est à peu près en L, le point de rotation (38) du bras de pivotement (26) étant disposé à une extrémité libre (39) de son petit côté, tandis que les centres (M1, M2) des deux galets (30, 31) sont prévus d'une part au point d'intersection (43) des deux côtés (40, 42) et d'autre part à l'extrémité libre (41) de l'autre côté (42).

4. Dispositif de verrouillage selon la revendication 3, caractérisé en ce que le point de rotation (38) du bras de pivotement (26) et les centres (M1, M2) des deux galets (30, 31) sont disposés en triangle.

5. Dispositif de verrouillage selon les revendications 1 et 2, caractérisé en ce que pendant la coopération du premier galet (30), présentant une plus grande distance (L1) par rapport au point de rotation (38), avec la voie de guidage (32), la capote (2) exécute un mouvement de levage vertical , d'une distance (H1), tandis que lorsque le deuxième galet (31) coopère ensuite avec la voie de guidage (32), la capote (2) exécute un mouvement de levage vertical d'une distance (H2) et il se produit en outre un verrouillage de la capote (2).

6. Dispositif de verrouillage selon la revendication 1, caractérisé en ce que le premier galet (30) se désengage de la voie de guidage (32) lorsque que le deuxième galet (31) est en contact avec la voie de guidage (32).

7. Dispositif de verrouillage selon la revendication 1, caractérisé en ce que les deux galets (30, 31) présentent des diamètres extérieurs différents.

8. Dispositif de verrouillage selon la revendication 1, caractérisé en ce que la voie de guidage (32) courbée, prévue sur le logement (16), est inclinée obliquement vers le bas dans la direction du côté extérieur du véhicule et présente, dans une zone centrale, un cran (45) en arc de cercle qui définit la position de verrouillage (C) de la capote (2).

9. Dispositif de verrouillage selon la revendication 8, caractérisé en ce qu'à l'extrémité inférieure de la voie de guidage (32), il est prévu une came (51) à laquelle fait suite une partie (52) s'étendant vers le haut à peu près à angle droit par rapport à la voie de guidage (32), laquelle partie permet au premier galet (30) de pivoter librement après passage de la came (51).

10. Dispositif de verrouillage selon la revendication 9, caractérisé en ce qu'au-dessous de la voie de guidage (32), il est prévu sur le logement (16), une zone (50) en forme de canal qui est limitée vers le bas par une partie de guidage (47) en arc, cette partie de guidage (47) déviant le premier galet (30) et éventuellement le deuxième galet (31) dans la direction de la voie de guidage (32).

FIG.1

FIG.5

FIG.6

FIG.2

FIG.3

FIG.4

EP 0 290 737 B1

FIG.7

FIG.8

FIG.9

FIG.10